# EUROPEAN PATENT SPECIFICATION

(11) **EP 1 767 341 B1**
(45) Date of publication and mention of the grant of the patent: **31.03.2010**
(21) Application number: 05020556.6
(22) Date of filing: 21.09.2005
(51) Int. Cl.: B32B 7/12, B32B 27/32, C09J 7/02

(54) **Self adhesive surface protection film**
Selbstklebende Oberflächenschutzfolie
Film protecteur de surface auto-adhérent

(43) Date of publication of application: 28.03.2007
(73) Proprietor: RKW SE, 67227 Frankenthal (DE)
(72) Inventor: Grefenstein, Achim, 67122 Altrip (DE); Wypelier, Frederic, 59770 Marly (FR); Lemaire, Jean-Louis, 59710 Ennevelin (FR)
(74) Representative: Wagner, Jutta

(56) References cited:
- EP-A- 1 260 566
- EP-A- 1 520 690
- JP-A- 60 092 312
- JP-A- 2000 144 069
- US-A- 5 278 272
- DUPONT DOW: "Engage 8150"[Online] XP002390830 Retrieved from the Internet: URL:http://www.channelpa.com/pdf/Engage815 0.pdf> [retrieved on 2006-07-18]
- EXXON MOBILE: "EXact 4011"[Online] XP002390831 Retrieved from the Internet: URL:http://www.exxonmobilchemical.com/Publ ic_Files/EEB/Plastomers/NorthAmerica/Data_ Sheet_Exact_Plastomer_4011_PolyMod.pdf> [retrieved on 2006-07-18]

## Description

The present invention relates to films used for protection of surfaces.

It is common practice to protect sensitive surfaces like glass, lacquers or plastic with self adhesive surface protection films. These surface protection films have to fulfil certain requirements. They should be
- flexible and able to conform to the surface contour
- adhere to the surface sufficiently to prevent a premature loosening
- easy to remove without residue once the protection is no longer necessary
- be inert towards the surface so that even during long contact with the surface no marking or other changes of the protected surface occurs

In the protection of thermoformable sheets, a constant adhesive force after thermoforming and ageing and the ability to remove the protection film and put it back once again is required additionally.

One proposed and widespread solution for surface protection of substrates is to use a film coated with a glue. Surface protection films are therefore today to a large extend coated with mostly acrylic glue. However acrylic glue and all glues in general tend to migrate to the substrate. Furthermore, the cost for the 2-step production is high. This renders glue coated films problematic for applications like protection of thermoformable sheets where the requirement of no migration to the surface of the substrate and resistance to ageing are of major importance.

Another proposal is the use of coextruded multilayer films. Those films comprise at least two layers, one serving as the protective surface and providing the films strength and the second providing sufficient adhesion to the surface of the substrate. One typically used coextruded film comprises ethylene vinyl acetate as adhesive layer. Those existing coextruded films are showing either an increasing or decreasing adhesion level after heat storage and/or thermoforming which is not acceptable for many applications.

Another approach uses tackifiers to provide sufficient adhesion of the film to the substrate. Formulations based on tackifiers (e.g. Hydrocarbon resin Escorez from Exxon) often show migration to the substrate especially after thermoforming.

Other existing solutions have too low adhesion forces in general or non-constant values in general (like corona-treated films).

Some prior art approaches are summarized in the following.

From DE 27 18 510 it is known to provide the surfaces of thermoplastic plastics sheets of polymethylmethacrylate (PMMA) with a protective film after manufacture, this film being produced from low density polyethylene having a melting index between 1 and 4 g/10 min and being pretreated on the adhesive side by corona discharge in order to improve the adhesion of the film to the plastics sheet. At a surface temperature of 60-100 °C the adhesion of this protective film is however highly variable, with the result that it may become detached at the edges or even over the entire surface. At the other extreme, the film may be torn as it is pulled away from the sheets or mouldings. The wide variability in adhesion of such films depends on the surface temperature of the sheet during application of the film and additionally on the nature of the surface of the film, eg. microscopic variations in the surface in the case of blown film, as well as fluctuations in the intensity of pretreatment and tolerances in the polyethylene granules caused by the manufacturing process.

US Patent Nos. 5,275,866 and 5,279,883 disclose self adhesive surface protection films of polyethylene, one surface of which is subjected to corona pretreatment at between 40 and 44 mN/m, and which are subsequently provided with a coating of an adhesive based on polyacrylic acid esters or based on natural rubber. The self adhesive surface protection films are indeed characterised by uniform and more reproducible adhesion to sheets of plastics, but as a result of thermal stresses during storage or during thermal forming, slight traces of adhesive may be left on the edges when the protective film is torn off quickly and these traces are visible on transparent objects such as light shades.

It is further known to use two-layer or multi-layered protective films produced by coextrusion, having an adhesive layer of ethylene-vinyl acetate copolymer as surface protection films. EP 761 315, EP 826 754, DE 100 07 060 and EP 1 326 937 are examples. In practice, it has been found that two-layer or multi-layered polyethylene protective films produced by coextrusion, having an adhesive layer of ethylene-vinyl acetate copolymer with a vinyl acetate content of about 18% by weight, react to temperature increases during storage and transportation and particularly during thermal forming by adhering much more strongly to the plastics sheets. If the vinyl acetate content of the adhesive layer is lower, eg. 9% by weight, the adhesion at ambient temperature is insufficient for working of the sheets by cutting, milling or drilling, with the result that the film lifts in the areas adjoining the machined edges. An increase in the degree of adhesion can be achieved by the known process of corona pretreatment, but here again the significant increase in adhesion as the temperature rises is a disadvantage. During thermal forming, in particular, the increase in adhesion as a result of the reduction in the film thickness in the deep-drawn areas of mouldings is detrimental in that the protective film tears easily when it is removed by the end user.

In DE 43 11 322 it is proposed to add one or more resins increasing the tack to an adhesive layer from ethylene vinyl acetate, polyethylene or mixtures thereof. However, tackifiers tend to migrate to the substrates which is unacceptable.

In EP 608 175 an adhesive mass is described, comprising either a mixture of at least one polyolefin with a Tackifier or comprising a mixture of a copolymer of ethylene and propylene with a copolymer of ethylene with an olefin such as butene, hexene or octene or with an ethylene vinyl acetate. Example 3 mentions a surface protection film made with 100 parts of ethylene octene copolymer and 10 parts of ethylene propylene copolymer. The film shows an adhesion of 0,1 -0,2 N/cm on PMMA, the adhesion is said to remain constant during thermoforming. This adhesion is too low, when a tackifier is used to reach sufficient adhesion migration problems occur.

EP 1 388 582 describes polyisobutylene and/or styrene block copolymer as adhesive layer. These films work well but are comparatively expensive.

EP 661 364 proposes the use of an adhesive layer based on a ternary copolymer of propylene, 1-butene, and an α-olefin with 5-12 C-atoms, with < 10% crystallinity and > 0,04 N/cm initial tack on steel plates. The ternary copolymer can be mixed with a binary copolymer or styrenic polymers.

Other suggestions are the use of butyl rubber or styrene butadiene styrene copolymer, styrene isoprene styrene block copolmer and tackifiers and/or polybutadiene, polyisobutylene as softeners.

EP 1 260 566 describes mixtures of low density polyethylene, polyethylene copolymers (with olefins, polypropylene, polypropylene and dienes, vinyl acetate, acryl, styrene, butadiene), styrene butadiene styrene copolymer, styrene isoprene styrene copolmers and or tackifiers with polyisobutenes and/or block copolymers with at least two blocks with aromatic structure and one block of diene. The examples mention copolymers of ethylene with olefins plus styrenic resins/tackifiers. The films are made in the blown process and peel forces between 0,1 and 3 N/cm are claimed to be achieved. Products containing dienes (double-bondings) are more sensitive to thermal or oxidative ageing, furthermore the price of such formulations is relatively high.

DE 101 16 438 claims self adhesive surface protection flms especially suitable for protecting the lacquer of cars comprising an adhesive layer containing a polymer from at least two different α-olefins, whereby the polymer does not contain 75 % by mole or more of one single monomer and has a Mooney-viscosity ML (1+4) 125 °C of at least 50. The examples only show films with an adhesive layer made of ethylene, propylene and 5-ethylidene-2-norbornene. Nothing is said in relation to peel strength after thermal impact of more than 90 °C. According to this patent the adhesive layer is either coated onto the base layer(s) or the materials have to be powdered e.g. with amorphous silica to effect coextrusion. Both approaches are costly.

JP 2000 144069 describes mixtures of polyethylene, copolymer of ethylene with an α-olefin with a DSC melting area smaller than 20 °C and 0.1 to 4.0 % tackifier. The examples show that mixtures without tackifier are not useful.

JP 60092312 relates to surface protective films that contain a copolymer of ethylene with an α-olefin made on a catalyst comprising an organo-aluminium compound and magnesium and titanium. The polymer shall have a melt index of 100 g/10 min, a density of 0,86-0,91 g/cm³, a peak melting temperature of up to 100 °C and a boiling hexane soluble fraction of at least 10 % by weight. These films do not show sufficient tack for the applications intended here.

EP 1 520 690 relates to a variety of differing multilayer films, amongst them are surface protection films. Copolymers of ethylene with α-olefins are mentioned as possible constituent of the adhesive layer. No specific examples are contained in the text, however, addition of a tackifier to influence the tack is foreseen and would be necessary to achieve sufficient tack for the applications intended by the present invention.

Therefore, it is an object of the present invention to provide surface protection films that are cost effective and solve the problems stated above for the known films.

In particular, the following objects are to be met:
- constant and high adhesion force adjustable up-to values of 3 N/cm depending on the substrate
- no or very low change after heat storage at e.g. 80°C for 24 h or 1 week
- no change after thermoforming
- no ageing, especially no ageing caused by doublebonds
- film can be removed and sticks once again on the surface.
- no migration even after heat storage of at least one week at 80°C.
- a protection film that provides a good diffusion of moisture and no absorbtion of moisture (<0,01 % according to DIN 53495 method 1) in the adhesive layer
- high transparent protection film

Surprisingly this problem can be solved by a multilayer film comprising an adhesive layer consisting of at least one copolymer of ethylene with an α-olefin with 4 to 10 carbon atoms with a density of 0,86 to 0,90 g/cm³ and a peak melting temperature of ≤ 50°C.

The copolymers of ethylene with an α-olefin with 4 to 10 carbon atoms, designated plastomers in the following, that are suitable for the present invention should have a low densitiy and a low peak melting temperature. As a rule a lower peak melting temperature provides a higher tack of the film. The peak melting temperature is preferably ≤ 60 °C, more preferably ≤ 50 °C and especially preferred ≤ 40 °C. The peak melting temperature is measured by DSC analysis according to ISO 11357 with a heating rate of 10 K per min.

One parameter influencing the peak melting temperaure is the content of the comonomer within the plastomer. Preferrably the content of the comonomer is ≥ 20 % by weight, especially preferred ≥ 23 % by weight. The comonomer content may be measured according to ASTM D-2238, method B. The content of ethylene is preferably ≥ 80 % by mole

The comonomer is chosen among α-olefins with 4 to 10 carbon atoms, like butene, pentene, hexene, heptene, octene, nonene and decene. Preferred are octene, hexene and butene, especially preferred is octene. It is possible that two or more comonomers are present.

Suitable products are e.g. the Exact grades from Exxon Mobile Corp. or the Engage grades from Dow Plastics (ethylene octene or ethylene butene copolymers). Very soft products like Engage are sometimes also designated Elastomers. A description of suitable plastomers from DOW Plastics can be found e.g. in US 5,272,236 and US 5,278,272.

Mixing with other plastomers with a higher melting temperature like e.g. 70 to 120 °C is possible to adjust the adhesion force at lower values, if desirable. Depending on the required adhesion level a content of higher melting products up-to 95% can be used. Preferred are contents of plastomers with higher melting temperature up to 80 % by weight and especially preferred up to 50 % by weight.

Optionally additives known per se like fillers, pigments, uv absorbers, antioxidants, heat stabilizers, lubricants can be present in the adhesive layer and/or the base layer(s). Additives are preferably used in the amounts recommended by the suppliers.

In a preferred embodiment the base layer or an outer layer in the case of a three or more layer film contains an antiblock agent. With the adhesive layer according to the invention it is possible to achieve a sufficient release with comparatively low contents of antiblock agents like for example silicates in an amount below 10 % by weight, preferably below 5 % by weight and especially preferred below 2 % by weight.

Surprisingly and in contrast to the prior art it was found that it is not necessary to mix a plastomer with another component like a second polymer or a tackifier in order to achieve high levels of tack. It is sufficient to use a plastomer with a peak melting point low enough.

The molecular weight distribution is preferably narrow, with Mw/Mn ≤ 4. The content of oligomers with molecular weights lower than 1000 should be as low as possible.

The film according to the invention has the additional advantage that its adhesive layer is compatible with most grades of polyethylene and polypropylene.

Films according to the invention are well suited for the temporary protection of thermoformed sheets of polymethylmethacrylate, polycarbonate, styrene acrylonitrile, acrylonitrile butadiene styrene terpolymer, polystyrene and for replacement of soft polyvinylchloride films, with and without printing, for advertisement and protection of e.g. mobile phone displays etc. They show a high transparency as has been tested with haze measurements.

Further, with an addition of a UV-stabilizer and optionally pigments like titaniumdioxide the films according to the invention are useful for protecting the lacquer of automobiles or window panes during transport.

The films according to the invention can be produced in a manner known as such e.g. on a conventional blown film line or cast film line. However, provisions should be made that the adhesive layer does not stick on one of the different rollers, knives or other devices being in contact with this layer. The extrusion parameters like temperature, output etc. are in the typical range for polyethylene blown or cast films.

The invention will be explained further with the following examples, which are not meant to restrict its scope, however. All parts and percentages are by weight except where stated otherwise.

### Example 1:

A three layer blown coextruded film was prepared with a first layer of low density polyethylene, a second layer of of low density polyethylene and a third (adhesive) layer of a plastomer. The film had an overall thickness of 60 µm.

For comparison, further films were prepared in the same manner with differing adhesive layers. One adhesive layer was a corona-treated film of linear low densitiy polyethylene (comonomer C₈-olefin), another was a plastomer with a peak melting point of 71 °C. Additionally, a blown three-layer film with EVA 45% (Levamelt 450 from Lanxess) as adhesive layer was produced.

The peel adhesion for the films was measured by laminating a test sample of the film on a thermoformable polymethylmethacrylate (PMMA) sheet (Degussa XT sheet) for several test samples from the film roll. Test samples are prepared out of a bundle of film cutted from the film roll, which extends at least 10 to 15 layers of the roll. Test samples 290 mm x 210 mm are extracted from the left, right and two times from the middle of the film roll. The test samples are laminated to the sheet not earlier than 1 day after production, with the machine direction of the film parallel to the machine direction of the sheet. The temperature of the sheet during lamination should be 70 °C. The pressure of the laminating device is set to 400 N and the temperature of the rolls to 70 °C or 23 °C. The line speed is adjusted to approximately 1 m/min and the film is fed to the heated roll. The gap is passed three times, forward-backward-forward.

The adhesion force is then measured with a standard tearing machine, e.g. from Instron. The specimen respective the protection film is cut into stripes of each 50 mm width before tearing them of. The haul-off speed is set to 500 mm/min, the angle to 180 ° in machine direction. The obtained force is normalized with the sample dimension to obtain the adhesion force. Tests are performed directly after sample preparation and 24 h, 1 week and 4 weeks after sample preparation. Additionally, samples are stored in an oven at 80 °C for 24 h, 1 week and 4 weeks and the adhesion force is measured as described after cooling them to room temperature.

The results are displayed in table 1.

**Table 1: Peel forces on thermoformable PMMA sheet**

| **Blown films with an adhesive layer made of ...** | **Initial peel force (N/cm)** | **After heat storage 24h @ 80 °C (N/cm)** |
|---|---|---|
| Plastomer, peak melting point 36°C | 1,20 | 1,08 |
| Plastomer, peak melting point 36°C, (laminated at 23°C) | 0,90 | 1,06 |
| Corona-treated LLDPE (42 dyne) | 0,36 | 0,02 |
| Plastomer, peak melting point 71 °C | 0,10 | 0,08 |
| Plastomer, peak melting point 71°C, plus tackifier resin | 1,05 | 0,79 |
| Plastomer, peak melting point 71 °C, plus tackifier resin (laminated at 23°C) | 1,12 | 0,53 |
| EVA (45% VA) | 1,60 | 3,07 |

It is obvious that only the products according to the invention show more or less constant values of the peel force between 0,9 and 1,2 N/cm even after heat storage. The corona treated film adheres inferior and its adhesive force is reduced dramatically after heat storage (this was confirmed for different corona levels of 38 to 48 dyne). Plastomers with higher peak melting point show a too low adhesion force as well. By using an additional tackifier it seems to be possible to increase the initial tack, however after heat exposure there is a remarkable decrease especially when cold laminated.

The film with EVA as adhesive shows a high initial tack (1,6 N/cm) being comparative to the films according to the invention, but an undesired increase after heat storage of 24 hours at 80°C (3,07 N/cm) occurs.

### Example 2:

Some films of example 1 are laminated on coextruded sheets with a top layer of clear styrene acrylonitrile, based on α-methylstyrene on a black blend including acrylonitrile styrene acryl terpolymer and polycarbonate. The speed of the extrusion line was 1 m/min, the width 700 mm and the overall thickness of the sheet 1,3 mm. The temperature at the lamination point was 32 °C.

The produced sheets were cutted with a saw and thermoformed on a single station machine from Illig Company with a forming temperature of 140 °C. The heating time was adjusted to 40 s. After that the adhesion force was measured according to example 1 in a non-stretched area of the part (side) and in a stretched area of the part (middle).

The results are displayed in table 2. The values represent the adhesion force for the laminates before thermoforming, after thermoforming before storage and after heat storage at 80 °C for 24 h and after heat storage at 80 °C for 1 week.

**Table 2: Peelforces on SAN sheet after application on extrusion line**

| Peel forces in N/cm | Plastomer with peak melting point of 36°C | Plastomer with peak melting point of 71 °C | Corona-treated LLDPE (42 dyne) |
|---|---|---|---|
| Before thermoforming | 0,96 | 0,03 | 0,07 |
| thermoformed middle | 1,48 | 0,04 | 0,38 |
| middle 80°C/24h | 1,47 | 0,03 | 0,16 |
| middle 80°C/1wk | 1,82 | 0,02 | 0,16 |
| thermoformed side | 1,07 | 0,02 | 0,44 |
| side 80°C/24h | 1,45 | 0,03 | 0,03 |
| side 80°C/1wk | 1,58 | 0,02 | 0,03 |

It can be seen that both comparison examples show much lower peel strength. Furthermore, the loss of adhesion after heat storage of the corona-treated film is demonstrated once again.

Only the sample according to the invention guarantees that the protection film sticks properly on the substrate during all process steps and can then be easily removed from the thermoformed part as well.

After one week of heat storage of the black thermoformed parts, the film according to the invention shows no markings (due to migration) whereas the corona-treated film of LLDPE shows the first migration of volatiles to the substrate.

### Example 3:

For some of the films described in example 1 the Haze was measured according to ASTM 1003. The results are listed in table 3.

**Table 3: Haze measured according to ASTM 1003**

| Adhesive layer of the film made of .... | Haze [%] |
|---|---|
| Cast film, benchmark GHX 375 HQ from Bischoff+Klein | 18,6 |
| Plastomer with melting point 36°C | 9,0 |
| Plastomer with melting point 71 °C | 8,8 |

The comparison shows that according to the invention it is possible to produce films with high tack and a high clarity or transparency.

## Claims

1. Self adhesive, coextruded multilayer surface protection film comprising a base layer and an adhesive layer, **characterized in that**, the adhesive layer consists of one or more copolymers of ethylene with one or more α-olefins with 4 to 10 carbon atoms with a density of 0,86 g/cm³ to 0,90 g/cm³, whereby at least one of the copolymers has a peak melting temperature of ≤ 50 °C.

2. A surface protection film according to claim 1, **characterized in that**, the peak melting point of the at least one copolymer is ≤ 40 °C.

3. A surface protection film according to claim 1 or 2, **characterized in that** the at least one copolymer is mixed with up to 95 % of other copolymers of ethylene with α-olefins with 4 to 10 carbon atoms with a higher peak melting temperature, e.g. between 70°C and 120°C.

4. A surface protection film according to any one of claims 1 to 3, **characterized in that** the base layer is made of polyethylene and/or polypropylene.

5. Surface protection film according to any one of claims 1 to 4, **characterized in that** an antiblock agent is contained in the base layer.

6. Surface protection film according to any one of claims 1 to 5, **characterized in that** a third outer layer is present and an antiblock agent is contained in the outer layer.

7. Surface protection film according to any one of claims 1 to 6, **characterized in that** a third inner layer is present containing a mineralic filler.

8. Surface protection film according to any one of claims 1 to 7, **characterized in that** the adhesive layer is corona treated.

9. Surface protection film according to any one of claims 1 to 8, **characterized in that** the adhesive layer has a peel force measured according to method described in example 1 of at least 0,5 N/cm on polymethylmethalcrylate, acrylonitrile butadiene styrene terpolymer, polystyrene, polycarbonate, and/or polyethylene terephthalate as substrate.

10. Surface protection film according to any one of claims 1 to 9, **characterized in that** the adhesive layer has a haze value, measured according to ASTM D-1003 of less than 15, especially less than 10.

11. Surface protection film according to any one of claims 1 to 10, **characterized in that** the mulitlayer film is a blown film.

12. Surface protection film according to any one of claims 1 to 10, **characterized in that** the mulitlayer film is a cast film.

13. Surface protection film according to any one of claims 1 to 12, **characterized in that** the copolymer of ethylene with one or more α-olefins contains at least 10% by weight, preferably 20% by weight, especially 23% by weight of comonomer of one or more α-olefins with 4 to 10 carbon atoms.

## Patentansprüche

1. Selbstklebende, koextrudierte, mehrlagige Oberflächenschutzfolie umfassend eine Basisschicht und eine Haftschicht, **dadurch gekennzeichnet, dass** die Haftschicht aus einem oder mehreren Copolymeren des Ethylen mit einem oder mehreren α-Olefinen mit 4 bis 10 Kohlenstoffatomen mit einer Dichte von 0,86 g/cm³ bis 0,90 g/cm³ besteht, wobei wenigstens eines der Copolymere eine Peak-Schmelztemperatur von ≤ 50 °C aufweist.

2. Oberflächenschutzfolie gemäß Anspruch 1, **dadurch gekennzeichnet, dass** der Peak-Schmelzpunkt des wenigstens einen Copolymers ≤ 40 °C ist.

3. Oberflächenschutzfolie gemäß Anspruch 1 oder 2, **dadurch gekennzeichnet, dass** das wenigstens eine Copolymer mit bis zu 95 % anderen Copolymeren des Ethylens mit einem oder mehreren α-Olefinen mit 4 bis 10 Kohlenstoffatomen mit einer höheren Peak-Schmelztemperatur, z.B. zwischen 70 °C und 120 °C, gemischt ist.

4. Oberflächenschutzfolie gemäß einem der Ansprüche 1 bis 3, **dadurch gekennzeichnet, dass** die Basisschicht aus Polyethylen und/oder Polypropylen hergestellt ist.

5. Oberflächenschutzfolie gemäß einem der Ansprüche 1 bis 4, **dadurch gekennzeichnet, dass** ein Antiblockmittel in der Basisschicht enthalten ist.

6. Oberflächenschutzfolie gemäß einem der Ansprüche 1 bis 5, **dadurch gekennzeichnet, dass** eine dritte äußere Schicht vorhanden ist und ein Antiblockmittel in der äußeren Schicht enthalten ist.

7. Oberflächenschutzfolie gemäß einem der Ansprüche 1 bis 6, **dadurch gekennzeichnet, dass** eine dritte innere Schicht vorhanden ist, die einen mineralischen Füllstoff enthält.

8. Oberflächenschutzfolie gemäß einem der Ansprüche 1 bis 7, **dadurch gekennzeichnet, dass** die Haftschicht Corona-behandelt ist.

9. Oberflächenschutzfolie gemäß einem der Ansprüche 1 bis 8, **dadurch gekennzeichnet, dass** die Haftschicht eine Trennkraft, gemessen nach dem in Beispiel 1 beschriebenen Verfahren, von wenigstens 0,5 N/cm gegenüber Polymethylmethacrylat, Acrylnitril-Butadien-Styrol-Terpolymer, Polystyrol, Polycarbonat und/oder Polyethylenterephthalat als Substrat hat.

10. Oberflächenschutzfolie gemäß einem der Ansprüche 1 bis 9, **dadurch gekennzeichnet, dass** die Haftschicht einen Trübwert, gemessen nach ASTM D-1003 von weniger als 15, insbesondere von weniger als 10 hat.

11. Oberflächenschutzfolie gemäß einem der Ansprüche 1 bis 10, **dadurch gekennzeichnet, dass** die mehrlagige Folie eine Blasfolie ist.

12. Oberflächenschutzfolie gemäß einem der Ansprüche 1 bis 10, **dadurch gekennzeichnet, dass** die mehrlagige Folie eine Gießfolie ist.

13. Oberflächenschutzfolie gemäß einem der Ansprüche 1 bis 12, **dadurch gekennzeichnet, dass** das Copolymer von Ethylen mit einem oder mehreren α-Olefinen mindestens 10 Gew.-%, vorzugsweise 20 Gew.-%, insbesondere 23 Gew.-% eines oder mehrerer α-Olefine mit 4 bis 10 Kohlenstoffatomen als Comonomer enthält.

## Revendications

1. Film protecteur de surface, autoadhésif, coextrudé, multicouches, comprenant une couche de base et une couche adhésive, **caractérisé en ce que** la couche adhésive est constituée par un ou plusieurs copolymères d'éthylène avec une ou plusieurs α-oléfines comprenant 4 à 10 atomes de carbone avec une densité de 0,86 g/cm³ à 0,90 g/cm³, où au moins un des copolymères présente une température de fusion de pic ≤ 50°C.

2. Film protecteur de surface selon la revendication 1, **caractérisé en ce que** le pic de fusion d'au moins un copolymère est ≤ 40°C.

3. Film protecteur de surface selon la revendication 1 ou 2, **caractérisé en ce qu'**au moins un copolymère est mélangé avec jusqu'à 95% d'autres copolymères d'éthylène avec des α-oléfines comprenant 4 à 10 atomes de carbone présentant une température de fusion de pic plus élevée, par exemple entre 70°C et 120°C.

4. Film protecteur de surface selon l'une quelconque des revendications 1 à 3, **caractérisé en ce que** la couche de base est en polyéthylène et/ou en polypropylène.

5. Film protecteur de surface selon l'une quelconque des revendications 1 à 4, **caractérisé en ce qu'**un agent antiblocage est contenu dans la couche de base.

6. Film protecteur de surface selon l'une quelconque des revendications 1 à 5, **caractérisé en ce qu'**une troisième couche externe est présente et un agent antiblocage est contenu dans la couche externe.

7. Film protecteur de surface selon l'une quelconque des revendications 1 à 6, **caractérisé en ce qu'**une troisième couche interne est présente contenant une charge minérale.

8. Film protecteur de surface selon l'une quelconque des revendications 1 à 7, **caractérisé en ce que** la couche adhésive est traitée au corona.

9. Film protecteur de surface selon l'une quelconque des revendications 1 à 8, **caractérisé en ce que** la couche adhésive présente une force de pelage mesurée selon le procédé décrit dans l'exemple 1 d'au moins 0,5 N/cm sur le poly(méthacrylate de méthyle), le terpolymère d'acrylonitrile-butadiène-styrène, le polystyrène, le polycarbonate, et/ou le poly(téréphtalate d'éthylène) comme substrat.

10. Film protecteur de surface selon l'une quelconque des revendications 1 à 9, **caractérisé en ce que** la couche adhésive présente une valeur de voile, mesurée selon la norme ASTM D-1003, inférieure à 15, en particulier inférieure à 10.

11. Film protecteur de surface selon l'une quelconque des revendications 1 à 10, **caractérisé en ce que** le film multicouches est un film soufflé.

12. Film protecteur de surface selon l'une quelconque des revendications 1 à 10, **caractérisé en ce que** le film multicouches est un film moulé.

13. Film protecteur de surface selon l'une quelconque des revendications 1 à 12, **caractérisé en ce que** le copolymère d'éthylène avec une ou plusieurs α-oléfines contient au moins 10% en poids, de préférence 20% en poids, en particulier 23% en poids de comonomère d'une ou de plusieurs α-oléfines comprenant 4 à 10 atomes de carbone.
